# EUROPÄISCHE PATENTSCHRIFT

(11) **EP 1 667 205 B1**
(45) Veröffentlichungstag und Bekanntmachung des Hinweises auf die Patenterteilung: **15.07.2015**
(21) Anmeldenummer: 05023771.8
(22) Anmeldetag: 31.10.2005
(51) Int. Cl.: H01K 1/18, H01K 9/08

(54) **Fahrzeugscheinwerferlampe**
Vehicle headlight lamp
Lampe de phare de véhicule

(30) Priorität: 03.11.2004 DE 102004053644
(43) Veröffentlichungstag der Anmeldung: 07.06.2006
(73) Patentinhaber: OSRAM GmbH, 80807 München (DE)
(72) Erfinder: Auer, Frank, 89542 Bolheim (DE); Wittmann, Klaus, 89567 Sontheim (DE); Zelt, Sascha, Dr., 89075 Ulm (DE)

(56) Entgegenhaltungen:
- EP-A- 0 884 216
- WO-A-98/49717
- DE-U1- 29 917 341
- FR-A- 777 304

## Beschreibung

Die Erfindung betrifft eine Fahrzeugscheinwerferlampe gemäß dem Oberbegriff des Patentanspruchs 1.

### I. Stand der Technik

Eine derartige Fahrzeugscheinwerferlampe ist beispielsweise in der EP-A 1 089 324 offenbart. Diese Schrift beschreibt eine Fahrzeugscheinwerferlampe mit einer ersten Glühwendel zur Erzeugung eines Fernlichts und einer zweiten Glühwendel zur Erzeugung eines Tagfahrlichts, wobei die Glühwendeln mit Hilfe von drei Stromzuführungsdrähten in koaxialer Ausrichtung innerhalb eines Lampengefäßes fixiert sind. Es hat sich gezeigt, dass die Funktionen Tagfahrlicht und Fernlicht besser mittels Fahrzeugscheinwerferlampen erzeugt werden können, die anstelle der vorgenannten koaxialen Ausrichtung der beiden Glühwendeln eine parallel versetzte Anordnung dieser Glühwendeln besitzen.

Die EP 0 884 216 A2 beschreibt eine Fahrzeugscheinwerferlampe mit zwei Glühwendeln, die mit Hilfe von drei in einer gemeinsamen Ebene angeordneten Stromzuführungsdrähte innerhalb eines mit einem Lampensockel versehenen Lampengefäßes fixiert sind, wobei die erste Glühwendel bei geeigneter Ausrichtung der Lampe mit Hilfe des unteren und oberen Stromzuführungsdrahtes fixiert ist und die zweite Glühwendel mit Hilfe des mittleren Stromzuführungsdrahtes parallel versetzt zur Achse der ersten Glühwendel angeordnet ist.

### II. Darstellung der Erfindung

Es ist die Aufgabe der Erfindung, eine gattungsgemäße Fahrzeugscheinwerferlampe mit einer verbesserten Aufhängung der Glühwendeln bereitzustellen.

Diese Aufgabe wird erfindungsgemäß durch die Merkmale des Patentanspruchs 1 gelöst. Besonders vorteilhafte Ausführungen der Erfindung sind in den abhängigen Patentansprüchen beschrieben.

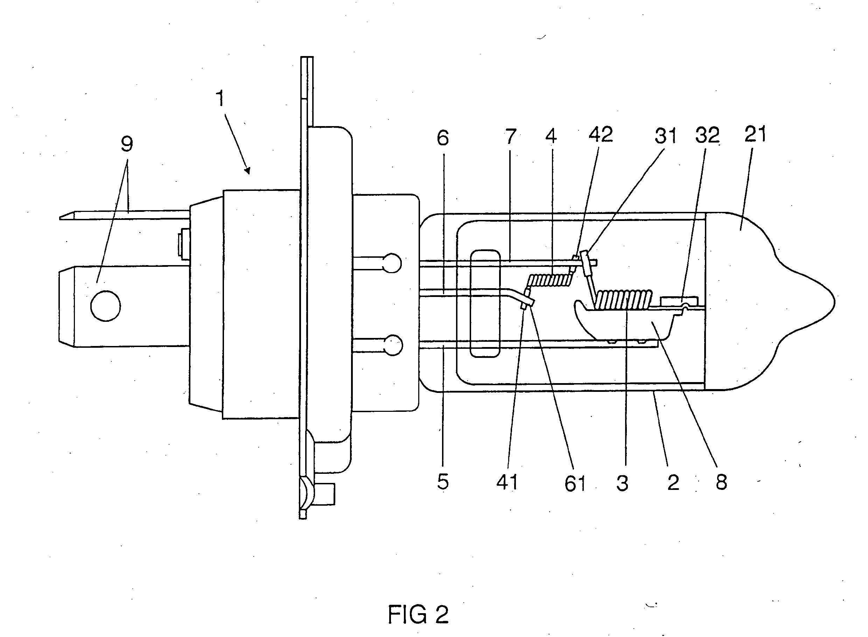

Die erfindungsgemäße Fahrzeugscheinwerferlampe weist eine erste Glühwendel, die vorzugsweise zur Erzeugung eines Fernlichts dient, und eine zweite Glühwendel auf, die vorzugsweise zur Erzeugung eines Tagfahrlichts dient, wobei die Glühwendeln mit Hilfe von drei in einer gemeinsamen Ebene, bei geeigneter Ausrichtung der Fahrzeugscheinwerferlampe übereinander angeordneten Stromzuführungsdrähten innerhalb eines mit einem Lampensockel versehenen Lampengefäßes fixiert sind, so dass die erste Glühwendel mit Hilfe des unteren und des oberen Stromzuführungsdrahtes fixiert ist und die zweite Glühwendel mit Hilfe des oberen und des mittleren Stromzuführungsdrahtes parallel versetzt zur Achse der ersten Glühwendel und oberhalb der Achse der ersten Glühwendel angeordnet ist. Durch die vorgenannte Anordnung der Stromzuführungsdrähte und der beiden Glühwendeln kann auf einfache Weise gewährleistet werden, dass die zweite Glühwendel in einem vorgebbaren Abstand parallel versetzt zur und oberhalb der Achse der ersten Glühwendel angeordnet ist. Die vorgenannte geeignete Ausrichtung der Fahrzeugscheinwerferlampe ist in Figur 2 dargestellt. Sie entspricht einer bevorzugten Betriebslage der erfindungsgemäßen Fahrzeugscheinwerferlampe. Aus Gründen des einfacheren Verständnisses ist die hier zur Beschreibung der Erfindung verwendete Terminologie an diese, in Figur 2 gezeigte Ausrichtung der Lampe geknüpft. Die erfindungsgemäße Fahrzeugscheinwerferlampe kann aber auch in beliebigen anderen Betriebslagen betrieben werden.

Um Lichtabschattungseffekte durch die Stromzuführungsdrähte, insbesondere durch den mittleren Stromzuführungsdraht, zu minimieren, ist vorteilhafter Weise der dem Lampensockel zugewandte sockelnahe, erste Wendelabgang der zweiten Glühwendel mit dem mittleren Stromzuführungsdraht verbunden und der vom Lampensockel abgewandte sockelferne, zweite Wendelabgang der zweiten Glühwendel ist mit dem oberen Stromzuführungsdraht verbunden.

Das mit einem Wendelabgang, vorzugsweise dem sockelnahen Wendelabgang, der zweiten Glühwendel verbundene Ende des mittleren Stromzuführungsdrahtes ist abgewinkelt ausgebildet, um den Grad der Parallelversetzung zwischen den beiden Glühwendeln in engen Grenzen einstellen zu können.

Die zweite Glühwendel ist vorzugsweise als einfach gewendelte Glühwendel ausgebildet, deren gewendelter Abschnitt eine Länge von 4,2 mm ± 0,3 mm und einen

Außendurchmesser von 0,76 mm ± 0,05 mm aufweist und 29 ± 3 Windungen besitzt, um bei einer Versorgungsspannung von 13,2 Volt eine Leistungsaufnahme im Bereich von 17 W bis 22 W zu gewährleisten.

Die erste Glühwendel ist zur Erzeugung des Fernlichts vorzugsweise teilweise von einer Abschattungsvorrichtung umgeben.

Gemäß dem bevorzugten Ausführungsbeispiel der Erfindung ist ein erster Wendelabgang der ersten Glühwendel mit dem oberen Stromzuführungsdraht verbunden, ihr zweiter Wendelabgang ist mit der Abschattungsvorrichtung verbunden, der dem Lampensockel der Fahrzeugscheinwerferlampe zugewandte sockelnahe, erste Wendelabgang der zweiten Glühwendel ist mit dem mittleren Stromzuführungsdraht verbunden und der vom Lampensockel abgewandte sockelferne, zweite Wendelabgang der zweiten Glühwendel ist mit dem oberen Stromzuführungsdraht verbunden. Dadurch dient einer der Stromzuführungsdrähte ausschließlich zur Fixierung der Abschattungsvorrichtung und zur Kontaktierung des mit der Abschattungsvorrichtung verbundenen Wendelabgangs der ersten Glühwendel. Der andere Wendelabgang der ersten Glühwendel und die Wendelabgänge der zweiten Glühwendel sind vorzugsweise mit den anderen beiden Stromzuführungsdrähten verbunden.

### III. Beschreibung des bevorzugten Ausführungsbeispiels

Nachstehend wird die Erfindung anhand eines bevorzugten Ausführungsbeispiels näher erläutert. Es zeigen:

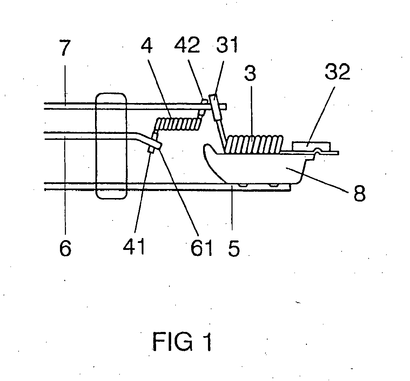

- Figur 1: Die Wendelaufhängung des bevorzugten Ausführungsbeispiels der erfindungsgemäßen Fahrzeugscheinwerferlampe in schematischer Darstellung
- Figur 2: Eine Seitenansicht des bevorzugten Ausführungsbeispiels der erfindungsgemäßen Fahrzeugscheinwerferlampe in schematischer Darstellung

Bei dem in der Figur 2 abgebildeten bevorzugten Ausführungsbeispiel der Erfindung handelt es sich um eine Halogenglühlampe für einen Fahrzeugscheinwerfer. Sie ist für den Betrieb an der Bordnetzspannung eines Kraftfahrzeugs vorgesehen. Diese Fahrzeugscheinwerferlampe besitzt ein mit einem Lampensockel 1 versehenes, gläsernes Lampengefäß 2, das im wesentlichen axialsymmetrisch ausgebildet ist. Innerhalb des Lampengefäßes 2 sind zwei Glühwendeln 3, 4 angeordnet, die mit Hilfe von drei Stromzuführungsdrähten 5, 6 und 7 elektrisch kontaktiert und fixiert sind. Jeder der Stromzuführungsdrähte 5 bis 7 ist aus dem abgedichteten Ende des Lampengefäßes 2 herausgeführt und jeweils mit einem elektrischen Anschluss 9 des Lampensockels 1 elektrisch leitend verbunden. Das andere Ende des Lampengefäßes 2, das heißt, die Kuppe des Lampengefäßes 2, ist mit einer lichtundurchlässigen Beschichtung 21 versehen. Die drei Stromzuführungsdrähte 5, 6 und 7 sind in einer gemeinsamen Ebene angeordnet und die Fahrzeugscheinwerferlampe ist während ihres Betriebs so ausgerichtet, dass die drei Stromzuführungsdrähte 5 bis 7 übereinander angeordnet sind. Die erste Glühwendel 3, die zur Erzeugung des Fernlichts dient, ist für eine elektrische Leistung im Bereich von 55 Watt bis 75 Watt bei einer Versorgungsspannung von 13,2 Volt ausgelegt. Der sockelnahe erste Wendelabgang 31 der ersten Glühwendel 3 ist dem oberen Stromzuführungsdraht 7 verbunden. Der sockelferne zweite Wendelabgang 32 der ersten Glühwendel 3 ist mit einer, die erste Glühwendel 3 teilweise umgebenden, metallischen Abblendkappe 8 verbunden. Die Abblendkappe 8 ist ihrerseits mit dem unteren Stromzuführungsdraht 5 verschweißt, so dass die erste Glühwendel 3 über die Stromzuführungsdrähte 5 und 7 sowie über die Abblendkappe 8 elektrisch kontaktiert ist.

Die zweite Glühwendel 4, die zur Erzeugung eines Tagfahrlichts dient, ist für eine elektrische Leistung im Bereich von ca. 17 Watt bis 22 Watt bei einer Versorgungsspannung von 13,2 Volt ausgelegt. Diese Glühwendel 4 ist als einfach gewendelte Glühwendel ausgebildet, deren gewendelter Abschnitt eine Länge von 4,2 mm und einen Außendurchmesser von 0,76 mm sowie 29 Windungen aufweist. Der sockelnahe erste Wendelabgang 41 der zweiten Glühwendel 4 ist mit dem nach unten abgewinkelten Ende 61 des mittleren Stromzuführungsdrahtes 6 verbunden. Der sockelferne zweite Wendelabgang 42 der zweiten Glühwendel 4 ist mit dem oberen Stromzuführungsdraht 7 verbunden.

Die Wickelachsen der beiden Glühwendeln 3, 4 sind um ca. 2 mm parallel versetzt angeordnet. Die Achse der ersten Glühwendel 3 verläuft im wesentlichen in der Achse des Lampengefäßes 2, während die Achse der zweiten Glühwendel 4 um ca. 2 mm oberhalb der Lampengefäßachse und der Achse der ersten Glühwendel 3 angeordnet ist.

Die Glühwendeln 3 und 4 bestehen üblicherweise aus Wolfram, während die Stromzuführungsdrähte 5, 6 und 7 sowie die Abblendkappe 8 aus Molybdän gefertigt sind. Die Verbindung der Wendelabgänge 31, 32, 41 und 42 der Glühwendeln 3 und 4 mit den Stromzuführungsdrähten 5 bis 7 bzw. der Abblendkappe 8 wird beispielsweise auf die konventionelle Weise mit Hilfe von Molybdänröhrchen durchgeführt, welche die Wendelabgänge mit Klemmsitz umgeben und die mit den Stromzuführungsdrähten bzw. der Abblendkappe verschweißt sind.

Die Erfindung beschränkt sich nicht auf das oben näher erläuterte Ausführungsbeispiel. Beispielsweise kann die lichtundurchlässige Beschichtung 21 auf der Lampengefäßkuppe entfallen. Außerdem kann die Erfindung auch auf andere Typen von Zwei-Wendel-Lampen angewandt werden.

## Patentansprüche

1. Fahrzeugscheinwerferlampe mit einer ersten Glühwendel (3) und einer zweiten Glühwendel (4), wobei die Glühwendeln (3, 4) mit Hilfe von drei Stromzuführungsdrähten (5, 6, 7) innerhalb eines mit einem Lampensockel (1) versehenen Lampengefäßes (2) fixiert sind und die drei Stromzuführungsdrähte (5, 6, 7) in einer gemeinsamen Ebene angeordnet sind, so dass sie bei geeigneter Ausrichtung der Fahrzeugscheinwerferlampe übereinander angeordnet sind, und wobei die erste Glühwendel (3) mit Hilfe des unteren (5) und des oberen Stromzuführungsdrahtes (7) fixiert ist und die zweite Glühwendel (4) mit Hilfe des mittleren Stromzuführungsdrahtes (6) parallel versetzt zur Achse der ersten Glühwendel (3) angeordnet ist, **dadurch gekennzeichnet, dass** der mittlere Stromzuführungsdraht (6) ein abgewinkeltes Ende (61) aufweist, das mit einem Wendelabgang (41) der zweiten Glühwendel (4) verbunden ist, und die zweite Glühwendel (4) mit Hilfe des oberen (7) und des mittleren Stromzuführungsdrahtes (6) oberhalb der Achse der ersten Glühwendel (3) angeordnet ist.

2. Fahrzeugscheinwerferlampe nach Anspruch 1, **dadurch gekennzeichnet, dass** der dem Lampensockel (1) der Fahrzeugscheinwerferlampe zugewandte sockelnahe, erste Wendelabgang (41) der zweiten Glühwendel (4) mit dem mittleren Stromzuführungsdraht (6) verbunden ist und der vom Lampensockel (1) abgewandte so-ckelferne, zweite Wendelabgang (42) der zweiten Glühwendel (4) mit dem oberen Stromzuführungsdraht (7) verbunden ist.

3. Fahrzeugscheinwerferlampe nach Anspruch 1, **dadurch gekennzeichnet, dass** eine Abschattungsvorrichtung (8) für die erste Glühwendel (3) vorgesehen ist, die an dem unteren Stromzuführungsdraht (5) fixiert ist.

4. Fahrzeugscheinwerferlampe nach Anspruch 3, **dadurch gekennzeichnet, dass** ein erster Wendelabgang (31) der ersten Glühwendel (3) mit dem oberen Stromzuführungsdraht (7) verbunden ist, ihr zweiter Wendelabgang (32) mit der Abschattungsvorrichtung (8) verbunden ist, der dem Lampensockel (1) der Fahrzeugscheinwerferlampe zugewandte sockelnahe, erste Wendelabgang (41) der zweiten Glühwendel (4) mit dem mittleren Stromzuführungsdraht (6) verbunden ist und der vom Lampensockel (1) abgewandte sockelfeme, zweite Wendelabgang (42) der zweiten Glühwendel (4) mit dem oberen Stromzuführungsdraht (7) verbunden ist.

5. Fahrzeugscheinwerferlampe nach Anspruch 1, **dadurch gekennzeichnet, dass** die zweite Glühwendel (4) als einfach gewendelte Glühwendel ausgebildet ist, deren gewendelter Abschnitt eine Länge von 4,2 mm und einen Außendurchmesser von 0,76 mm mm aufweist und 29 Windungen besitzt.

6. Fahrzeugscheinwerferlampe nach einem oder mehreren der Ansprüche 1 bis 5, **dadurch gekennzeichnet, dass** eine Glühwendel (3) als Fernlichtglühwendel und die andere Glühwendel (4) als Tagfahrlichtglühwendel ausgebildet ist.

## Claims

1. Vehicle headlamp having a first incandescent filament (3) and a second incandescent filament (4), the incandescent filaments (3, 4) being fixed within a lamp vessel (2) - which is provided with a lamp base (1) - using three supply lead wires (5, 6, 7) and the three supply lead wires (5, 6, 7) being arranged in a common plane, with the result that they are arranged one above the other when the vehicle headlamp is suitably oriented, and the bottom supply lead wire (5) and the top supply lead wire (7) being used to fix the first incandescent filament (3) and the middle supply lead wire (6) being used to arrange the second incandescent filament (4) such that it is offset in a parallel manner with respect to the axis of the first incandescent filament (3), **characterized in that** the middle supply lead wire (6) has a bent end (61) that is connected to a filament outgoing feeder (41) of the second incandescent filament (4), and the top supply lead wire (7) and the middle supply lead wire (6) are used to arrange the second incandescent filament (4) above the axis of the first incandescent filament (3).

2. Vehicle headlamp according to Claim 1, **characterized in that** the first filament outgoing feeder (41) - which faces the lamp base (1) of the vehicle headlamp and is close to the base - of the second incandescent filament (4) is connected to the middle supply lead wire (6) and the second filament outgoing feeder (42) - which faces away from the lamp base (1) and is remote from the base - of the second incandescent filament (4) is connected to the top supply lead wire (7).

3. Vehicle headlamp according to Claim 1, **characterized in that** a shading apparatus (8) is provided for the first incandescent filament (3), said shading apparatus being fixed to the bottom supply lead wire (5).

4. Vehicle headlamp according to Claim 3, **characterized in that** a first filament outgoing feeder (31) of the first incandescent filament (3) is connected to the top supply lead wire (7), its second filament outgoing feeder (32) is connected to the shading apparatus (8), the first filament outgoing feeder (41) - which faces the lamp base (1) of the vehicle headlamp and is close to the base - of the second incandescent filament (4) is connected to the middle supply lead wire (6) and the second filament outgoing feeder (42) - which faces away from the lamp base (1) and is remote from the base - of the second incandescent filament (4) is connected to the top supply lead wire (7).

5. Vehicle headlamp according to Claim 1, **characterized in that** the second incandescent filament (4) is in the form of a single-coiled incandescent filament whose coiled section has a length of 4.2 mm and an external diameter of 0.76 mm and has 29 turns.

6. Vehicle headlamp according to one or more of Claims 1 to 5, **characterized in that** one incandescent filament (3) is in the form of a main beam incandescent filament and the other incandescent filament (4) is in the form of a daytime running light incandescent filament.

## Revendications

1. Lampe de phare de véhicule avec un premier filament incandescent (3) et un deuxième filament incandescent (4), dans laquelle les filaments incandescents (3, 4) sont fixés au moyen de trois fils d'alimentation électrique (5, 6, 7) à l'intérieur d'un récipient de lampe (2) munie d'un culot de lampe (1) et les trois fils d'alimentation électrique (5, 6, 7) sont disposés dans un plan commun, de telle manière qu'ils soient disposés l'un au-dessus de l'autre pour une orientation appropriée de la lampe de phare de véhicule, et dans laquelle le premier filament incandescent (3) est fixé au moyen des fils d'alimentation électrique inférieur (5) et supérieur (7) et le deuxième filament incandescent (4) est disposé en position décalée parallèlement à l'axe du premier filament incandescent (3) au moyen du fil d'alimentation électrique médian (6), **caractérisée en ce que** le fil d'alimentation électrique médian (6) présente une extrémité coudée (61), qui est reliée à un bout de filament (41) du deuxième filament incandescent (4), et le deuxième filament incandescent (4) est disposé au-dessus de l'axe du premier filament incandescent (3) au moyen des fils d'alimentation électrique supérieur (7) et médian (6).

2. Lampe de phare de véhicule selon la revendication 1, **caractérisée en ce que** le premier bout de filament (41) du deuxième filament incandescent (4) proche du culot et tourné vers le culot de lampe (1) de la lampe de phare de véhicule est relié au fil d'alimentation électrique médian (6) et le deuxième bout de filament (42) du deuxième filament incandescent (4) éloigné du culot et orienté en sens opposé au culot de lampe (1) est relié au fil d'alimentation électrique supérieur (7).

3. Lampe de phare de véhicule selon la revendication 1, **caractérisée en ce qu'**il est prévu un dispositif d'assombrissement (8) pour le premier filament incandescent (3), qui est fixé au fil d'alimentation électrique inférieur (5).

4. Lampe de phare de véhicule selon la revendication 3, **caractérisée en ce qu'**un premier bout de filament (31) du premier filament incandescent (3) est relié au fil d'alimentation électrique supérieur (7), son deuxième bout de filament (32) est relié au dispositif d'assombrissement (8), le premier bout de filament (41) du deuxième filament incandescent (4) proche du culot et tourné vers le culot de lampe (1) de la lampe de phare de véhicule est relié au fil d'alimentation électrique médian (6) et le deuxième bout de filament (42) du deuxième filament incandescent (4) éloigné du culot et orienté en sens opposé au culot de lampe (1) est relié au fil d'alimentation électrique supérieur (7).

5. Lampe de phare de véhicule selon la revendication 1, **caractérisée en ce que** le deuxième filament incandescent (4) est un filament incandescent à simple enroulement, dont la partie enroulée présente une longueur de 4,2 mm et un diamètre extérieur de 0,76 mm et compte au moins 29 spires.

6. Lampe de phare de véhicule selon une ou plusieurs des revendications 1 à 5, **caractérisée en ce qu'**un filament incandescent (3) est un filament incandescent pour l'éclairage lointain et l'autre filament incandescent (4) est un filament incandescent pour l'éclairage de jour.
